Europäisches Patentamt

(19) European Patent Office

Office européen des brevets

(11) Publication number: **0 248 587**
**A2**

(12) **EUROPEAN PATENT APPLICATION**

(21) Application number: **87304680.9**

(22) Date of filing: **27.05.87**

(51) Int. Cl.³: **G 11 B 23/023**

(30) Priority: **29.05.86 GB 8613096**

(43) Date of publication of application:
**09.12.87 Bulletin 87/50**

(84) Designated Contracting States:
**AT CH DE FR IT LI NL**

(71) Applicant: **Henly, Desmond Russell**
**24 Highbury Road**
**Weston-super-Mare Avon BS23 2DN(GB)**

(72) Inventor: **Henly, Desmond Russell**
**24 Highbury Road**
**Weston-super-Mare Avon BS23 2DN(GB)**

(74) Representative: **Newstead, Michael John et al,**
**Page & Co. Temple Gate House Temple Gate**
**Bristol BS1 6PL(GB)**

(54) **Cassette presentation case.**

㊗ A cassette presentation case comprises a box (1) closed on all sides and having formed in a major face (3) thereof an aperture (5) which receives a cassette holder (2). The major face of the box and an outward facing surface of the cassette holder carry interfitting portions of a design or picture so as to present together a single design or picture.

Fig. 1.

EP 0 248 587 A2

CASSETTE PRESENTATION CASE                    0248587

The present invention is concerned with a presentation case for a cassette, particularly but not exclusively for an audio cassette.

According to the invention there is provided a presentation case for a cassette, comprising a box closed on all sides and having formed in a major face thereof an aperture which receives a cassette holder. Preferably said major face of the box and an outward facing surface of the cassette holder carry interfitting portions of a design or picture so as to present a single design or picture.

The invention will now be described by way of example only, with reference to the accompanying drawings, in which:

Fig. 1 shows an outline perspective drawing of a presentation case and its cassette holder; and

Fig. 2 shows a modification of what is shown in Fig. 1.

The illustrated presentation case comprises a box 1 formed from a cardboard blank cut and folded to the shape of a rectangular box having two parallel rectangular or square major faces and having a relatively shallow depth, approximately equal to the depth of a cassette holder 2. The box 1 is closed on all sides.

Let into one of the major faces 3 of the box 1 is a compartment 4 for receiving cassette holder 2. A rectangular aperture 5 is formed in the face 3 of the same size as the external dimensions of the cassette holder 2. In the cardboard blank, the aperture is defined with inwardly extending flaps or tabs 5a which are scored and bent over into the box 1 to form sides to the compartment 4 to positively locate the cassette holder 2. These flaps are the same width as the cassette holder 2 but, if desired may be wider and the extra width portion bent over and glued to the inner surface of the rear face of box 1.

A length of tape or ribbon 6 is attached to one of the flaps 5a, preferably the flap along one of the two shorter edges of the aperture 4, so that it bisects the aperture 4 and lies behind the cassette holder 2 when the latter is located in the aperture 4.

Along one edge of the box 1, preferably, but not necessarily its longest side, there is pivotally attached a cover or lid 7 which closes against the major face 3 of the box 1 containing the cassette holder receiving compartment 4. The cover 7 has dimensions equal to those of the major face 3. The distal edge of the cover 7 may be provided with a tab 8 approximately mid-way along its length. There is formed in a corresponding position in the major face 3 of the box 1 a narrow slit like aperture 9 for receiving the tab 8 so that the cover 7 may be caught in the closed position by inserting the tab 8 into the aperture 9.

The major surfaces of the box 1, and also the cover 7, bear one or more designs or pictures. In particular, the major face 3 of the box 1, in which the compartment 4 is formed, bears one large design or picture which extends over substantially the whole surface, a portion of the design or picture being "missing" by virtue of the compartment 4. The outward facing surface of the cassette holder 2 bears the "missing" portion of the design or picture, so that when the cassette holder 2 is located in the compartment 4, the parts of the design or picture carried on the major face 3 on box 1 and the outward facing surface of the cassette holder 2 fit one into the other to form a single design or picture.

There may also be provided one or more pages or leaves 10 attached close to or along the line of attachment of the cover 7 to the box 1 so that these form further flip-over pages which may carry further designs and pictures or other material. Optionally, the design carried on the major face 3 of the box 1 may extend over the facing surface of one such page 10 or, if these are not included, over the inner face of the cover 7.

Although the presentation case described and illustrated is square or rectangular alternative configurations, for example round or oval, are envisaged. Preferably, the cassette holder 2 is let into the compartment 4 so that one of its faces lies flush with a major face of the box. Also the case may be designed to house a plurality of cassette holders which, in the manner described above, may bear several parts of a single picture or design. Instead of being made from cardboard, the box 1 and/or the cover 7 and/or the leaf or leaves 10 may be of plastics material.

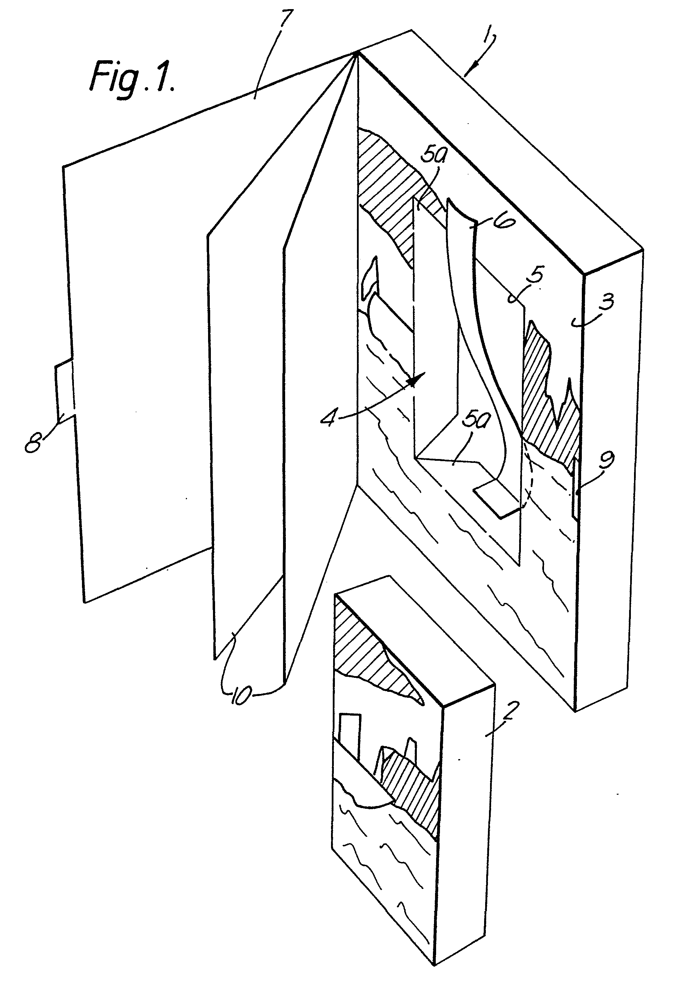

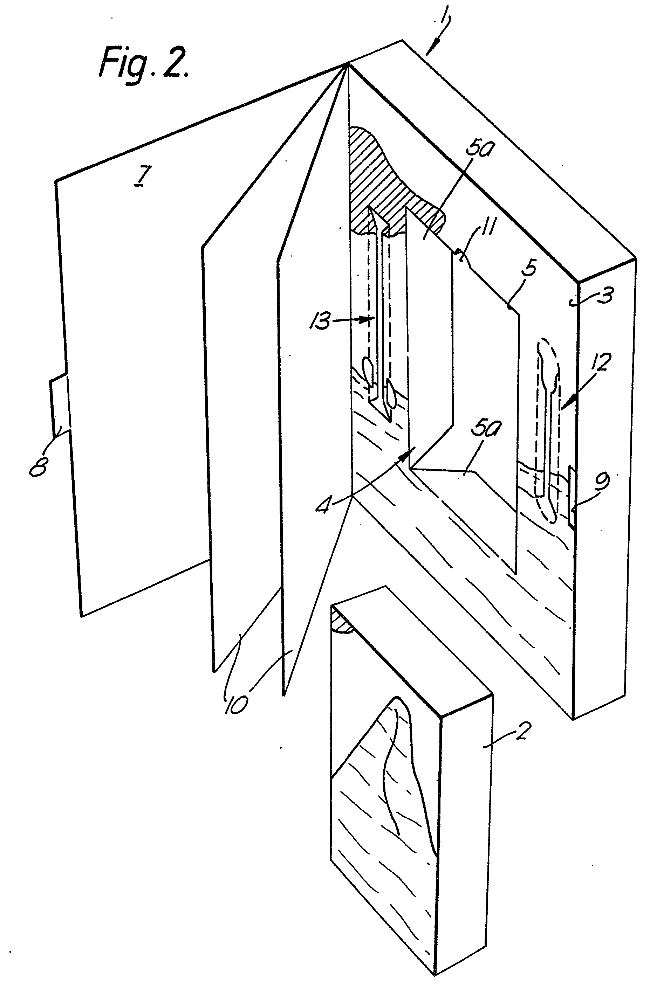

In a modification, instead of the box 1 having a ribbon 6, the blank is cut and folded so that at the upper side of aperture 5 there is a hole 11 into which a finger may be inserted to lift out the cassette holder 2 - see Fig. 2. As shown in Fig. 2, the box 1 also has recesses 12 and 13 in the major face 3, one on each side of the aperture 5. Each of these recesses (there could be just one, or more than two) is provided by appropriate cutting and folding of the blank, and is shaped to receive a particular item, such as a watch or a pen-knife to be also carried by the presentation case. The example of Fig. 1 could also have one or more such recesses.

CLAIMS

1. A presentation case for a cassette, comprising a box closed on all sides and having formed in a major face thereof an aperture which receives a cassette holder.

2. A case according to Claim 1, wherein said major face of the box and an outward facing surface of the cassette holder carry interfitting portions of a design or picture so as to present together a single design or picture.

3. A case according to Claim 1 or 2, wherein the box has been formed from a cut and folded blank.

4. A case according to any preceding claim, wherein the box has a pivotal cover or lid which closes over the cassette holder receiving aperture.

5. A case according to Claim 4, wherein there are one or more pages or leaves pivotally mounted with the cover or lid to close over the cassette holder receiving aperture and under the cover or lid.

6. A case according to any preceeding claim, wherein the box has at least one recess for receiving a respective article as well as the cassette holder.

0248587

Fig.1.

Fig. 2.